# EUROPÄISCHE PATENTSCHRIFT

(11) **EP 1 673 267 B1**
(45) Veröffentlichungstag und Bekanntmachung des Hinweises auf die Patenterteilung: **24.10.2007**
(21) Anmeldenummer: 04816320.8
(22) Anmeldetag: 06.10.2004
(51) Int. Cl.: B60T 8/36

(54) **HYDRAULIKAGGREGAT**
HYDRAULIC UNIT
ENSEMBLE HYDRAULIQUE

(30) Priorität: 10.10.2003 DE 10347147; 24.06.2004 DE 102004030625
(43) Veröffentlichungstag der Anmeldung: 28.06.2006
(73) Patentinhaber: Continental Teves AG & Co. oHG, 60488 Frankfurt (DE)
(72) Erfinder: OTTO, Albrecht, 61137 Schöneck (DE)
(86) Internationale Anmeldenummer: PCT/EP2004/052453
(87) Internationale Veröffentlichungsnummer: WO 2005/047072

(56) Entgegenhaltungen:
- WO-A1-97/12790
- WO-A1-99/25594
- WO-A1-03/064229
- DE-A- 19 542 582
- PATENT ABSTRACTS OF JAPAN Bd. 1996, Nr. 11, 29. November 1996 (1996-11-29) -& JP 08 188137 A (UNISIA JECS CORP), 23. Juli 1996 (1996-07-23)
- PATENT ABSTRACTS OF JAPAN Bd. 2000, Nr. 25, 12. April 2001 (2001-04-12) -& JP 2001 225736 A (UNISIA JECS CORP), 21. August 2001 (2001-08-21)

## Beschreibung

Die Erfindung betrifft ein Hydraulikaggregat für eine schlupfgeregelte Bremsanlage nach dem Oberbegriff des Patentanspruchs 1.

Ein Hydraulikaggregat der vorgenannten Art ist bereits aus der DE 195 42 582 A1 bekannt. Darin wird vorgeschlagen, die Geräuschdämpfungskammer parallel zur Pumpenbohrung im Aufnahmekörper anzuordnen und die Pumpenbohrung über einen Kanal an der Geräuschdämpfungskammer anzuschließen, wozu der Kanal radial in die Wand der Geräuschdämpfungskammer einmündet. Zum Anschluss der Geräuschdämpfungskammer an wenigstens einen der Radbremsanschlüsse des Aufnahmekörpers ist ein weiterer, radial in die Mantelfläche der Geräuschdämpfungskammer einmündender Kanal vorgesehen, der zu wenigstens einem der Bremsdruckgeberanschlüsse führt.

Aus JP 08 188 137 A ist ein Hydraulikaggregat bekannt, dessen Pumpenbohrung über einen Schrägkanal mit einer Geräuschdämpfungskammer verbunden ist, wozu der Schrägkanal in einem spitzen Winkel ausgehend von der Wand der Pumpenbohrung entfernt vom Boden der Geräuschdämpfungskammer in die Bohrungswand der Geräuschdämpfungskammer einmündet.

Sowohl in DE 195 42 582 A1 als auch JP 08 188 137 A ist jeweils infolge der gewählten Anordnung der mit der Geräuschdämpfungskammer verbundenen Kanäle eine vollkommene Durchspülung der Geräuschdämpfungskammer zum Zwecke einer optimalen Entlüftung erschwert.

Daher ist es die Aufgabe der Erfindung, ein Hydraulikaggregat der angegebenen Art mit möglichst einfachen Mitteln derart zu verbessern, dass vorgenannter Nachteil vermieden wird.

Diese Aufgabe wird für ein Hydraulikaggregat der angegebenen Art mit den kennzeichnenden Merkmalen des Anspruchs 1 gelöst.

Weitere Merkmale, Vorteile und Anwendungsmöglichkeiten der Erfindung werden nachfolgend anhand der Beschreibung eines Ausführungsbeispiels erläutert.

Es zeigen:
- Figur 1: eine Gesamtansicht in Perspektivdarstellung eines Aufnahmekörpers für ein Hydraulikaggregat,
- Figur 2: zur Verdeutlichung der Erfindung eine Teilansicht in Perspektivdarstellung des in Figur 1 abgebildeten Aufnahmekörpers.

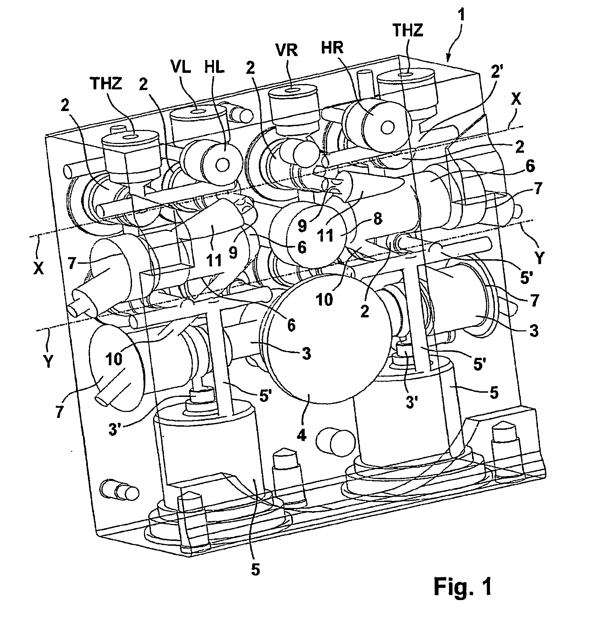

Die Fig. 1 zeigt ein Hydraulikaggregat für eine schlupfgeregelte, zweikreisige Bremsanlage in einer Perspektivdarstellung, mit einem blockförmigen Aufnahmekörper 1, der in mehreren Ventilaufnahmebohrungen 2 einer ersten und zweiten Ventilreihe X, Y Ein- und Auslaßventile aufnimmt und der neben den beiden Ventilreihen X, Y eine Pumpenbohrung 3 aufweist, die quer zur Einmündungsrichtung der Ventilaufnahmebohrung 2 in den Aufnahmekörper 1 gerichtet ist. Neben den beiden Ventilreihen X, Y ist ferner eine Motoraufnahmebohrung 4 angeordnet, die senkrecht in einen Kurbelraum einmündet, der die Pumpenbohrung 3 zur Aufnahme zweier Pumpenkolben in zwei Bohrungsabschnitte unterteilt. Entfernt zu den beiden Ventilreihen X, Y sind außerdem im Aufnahmekörper 1 zwei Niederdruckspeicherbohrungen 5 angeordnet, die senkrecht zu den Symmetrieachsen der Ventilaufnahmebohrungen 2 und senkrecht zu der Längsachse der Pumpenbohrung 3 neben der Pumpenbohrung 3 in den Aufnahmekörper 1 gerichtet sind. Mehrere die Ventilaufnahmebohrungen 2, Pumpen- und Niederdruckspeicherbohrungen 3, 5 verbindende Druckmittelkanäle 2', 3', 5' ermöglichen für jeden der beiden Bremskreise eine hydraulische Verbindung zwischen den beiden Bremsdruckgeberanschlüsse THZ und den vier Radbremsanschlüssen HR, HL, VR, VL.

Die über die Ventilaufnahmebohrungen 2 in der ersten Ventilreihe X an den Druckmittelkanälen 2' angeschlossenen Radbremsanschlüsse HL, HR sind montagegünstig parallel zur Motoraufnahmebohrung 4 an der Oberseite des Aufnahmekörpers 1 angeordnet, so daß mehrere Rohrleitungen unproblematisch neben einem an der Motoraufnahmebohrung 4 anzuflanschenden Motorengehäuse gut zugänglich angeschraubt werden können.

Die zweite Ventilreihe Y enthält ausschließlich die für die Auslaßventile vorgesehenen Ventilaufnahmebohrungen 2, die zwischen der Pumpenbohrung 3 und der ersten Ventilreihe X, welche ausschließlich die Ventilaufnahmebohrungen 2 für die Einlaßventile aufweist, gelegen ist. Hierdurch ergeben sich besonders kurze, gerade Druckmittelkanäle 2' zwischen jeweils einem paar, ein Einlaß- und Auslaßventil aufweisenden Ventilaufnahmebohrungen 2 in den Ventilreihen X, Y für jede Radbremse. Über paarweise zusammengeführte Rücklaufkanäle 5' ergibt sich für jeden Bremskreis eine äußerst einfache Verbindung zwischen den Ventilaufnahmebohrungen 2 der Ventilreihe Y und den beiden Niederdruckspeicherbohrungen 5. Der zwischen der Pumpenbohrung 3 und der Niederdruckspeicherbohrung 5 angeordnete Pumpensaugkanal 3' ist durch die bereits erwähnte Blockverbohrung für die einzelnen Aufnahmebohrungen derart kurz und damit extrem platzsparend ausgelegt, daß darin ein jeweils in Richtung der Niederdruckspeicherbohrung 5 sperrendes sowie federbelastetes Rückschlagventil (Pumpensaugventil) gerade noch optimal plaziert werden kann.

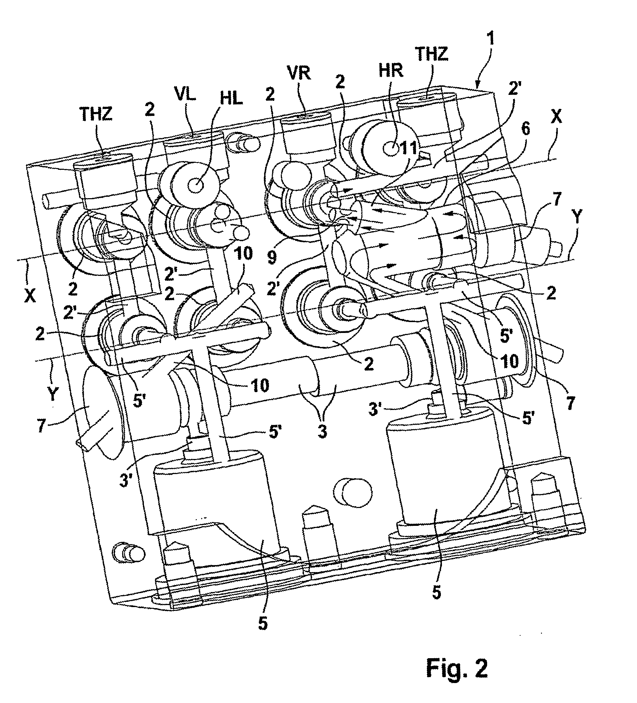

Ferner sind für beide Bremskreise neben der Pumpenbohrung 3 zwei hohlzylinderförmige, als Sackbohrungen ausgeführte Geräuschdämpfungskammern 6 vorgesehen, die achsparallel zur Pumpenbohrung 3 ausgerichtet sind, die über spezielle, anhand der Figur 2 nachfolgend detailliert beschriebene Druckmittelkanäle mit der Pumpenbohrung 3 und den Ventilaufnahmebohrungen 2 der ersten Ventilreihe X im Aufnahmekörper 1 verbunden sind.

Ferner befindet sich in zentraler Lage zwischen den beiden Ventilreihen X, Y eine weitere Durchgangsöffnung 8 im Aufnahmekörper 1, um einen aus dem Motorengehäuse hervorstehenden elektrischen Stecker auf kürzestem Weg von der Oberseite zur Unterseite des blockförmigen Aufnahmekörpers 1 zu führen, um den Stecker zur elektrischen Kontaktierung an einem an der Unterseite des Aufnahmekörpers 1 befestigten Ventilsteuergerät anzuschließen, das gleichzeitig die Steuerelektronik zum Antrieb des im Motorengehäuse integrierten Elektromotors beinhaltet.

Die Erfindung wird nachfolgend anhand der Figur 2 beschrieben, in der zwecks guter Überschaubarkeit lediglich eine der beiden Geräuschdämpfungskammern 6 dargestellt und nachfolgend im Zusammenhang mit den wesentlichen Merkmalen der Erfindung erläutert wird.

Erfindungsgemäß ist die Wand der Pumpenbohrung 3 von einer Seitenfläche des Aufnahmekörpers 1 aus von einem Schrägkanal 10 durchdrungen, der unter einem spitzen Winkel im Bereich des Bodens der Geräuschdämpfungskammer 6 einmündet. Auch die Wand der Geräuschdämpfungskammer 6 ist von der Seitenfläche des Aufnahmekörpers 1 aus unter einem spitzen Winkel von einem weiteren Schrägkanal 11 durchdrungen, der im Bodenbereich einer Ventilaufnahmebohrung 2 in der ersten Ventilreihe X einmündet.

Die beiden Schrägkanäle 10, 11 bilden die wesentlichen Mittel, welche für eine gründliche Durchströmung und Umlenkung des Druckmittels in der Geräuschdämpfungskammer 6 eine definierte Zu- als auch Abströmrichtung des Druckmittels bewirken. Durch die vom Schrägkanal 10 vorgegebene Zuströmrichtung trifft das von der Pumpe in den Schrägkanal 10 geförderte Druckmittel auf den Boden der Geräuschdämpfungskammer 6, wird dort aufgerichtet und um 180 Grad umgelenkt, so dass der Strömungsverlauf anschließend entgegengesetzt zur Zuströmung innerhalb der Geräuschdämpfungskammer 6 in Richtung des an der Seitenfläche des Aufnahmekörpers 1 in die Geräuschdämpfungskammer 6 eingesetzten Verschlusskörpers 7 erfolgt. An der Wand des Verschlusskörpers erfolgt wiederum eine erneute Kehrtwendung der Strömung in die entgegengesetzte Richtung, die der Abströmrichtung des weiteren Schrägkanals 11 entspricht, so dass durch den hiermit beschriebenen Strömungsverlauf eine gründliche Durchspülung der Geräuschdämpfungskammer 6 erfolgt. Durch diesen Spülvorgang lässt sich das partielle Einlagern von Luftblasen in kritischen Bereichen der Geräuschdämpfungskammer 6 erfolgreich verhindern.

Durch eine zweckmäßige Einbaülage des Hydraulikaggregats im Kraftfahrzeug sind die beiden Schrägkanäle 10, 11 in Durchströmungsrichtung stets aufsteigend zu den am höchsten Punkt des Aufnahmekörpers 1 angeordneten Bremsdruckgeberanschlüssen THZ ausgerichtet. Da beide Schrägkanäle 10, 11 als Sackbohrungen ausgeführt sind, lassen sie sich durch die in die Seitenfläche des Aufnahmekörpers eingesetzten beiden Verschlusskörper 7 besonders einfach verschließen.

Der Schrägkanal 10 durchdringt stromabwärts zu einem in die Pumpenbohrung 3 eingesetzten Pumpendruckventil die Pumpenbohrung 3, während der sogenannte weitere Schrägkanal 11 die Geräuschdämpfungskammer 6 in Richtung auf eine in der ersten Ventilreihe X angeordnete Ventilaufnahmebohrung 2 gerichtet ist. Eine Blende 9 ist verhältnismäßig einfach in die Geräuschdämpfungskammer 6 eingeführt und stromabwärts zur Geräuschdämpfungskammer 6 in den Schrägkanal 11 eingesetzt, um eine möglichst effektive Geräuschdämpfung zu erzielen. Der Schrägkanal 11 endet stromabwärts der Blende 9 als kurzer Winkelkanal im Boden der Ventilaufnahmebohrung 2.

Die Figuren 1, 2 verdeutlichen die Vorzüge der gewählten Blockverbohrung im Aufnahmekörper 1. Die Blockverbohrung ist hierbei so weit optimiert, daß lediglich die für die Ventilreihen X, Y vorgesehenen Druckmittelkanäle 2', 5' separat an den Seitenflächen des Aufnahmekörpers 1 verkugelt, d.h. mittels geeigneter Dichtstopfen zu verschließen sind.

Hingegen sind die Schrägkanäle 10, 11 derart günstig angeordnet, daß oben genannte Verkugelung entfällt. Dies ist deshalb auf besonders einfache Weise möglich, da der von der Geräuschdämpfungskammer 6 zur ersten Ventilreihe X verlaufende Schrägkanal 11 durch ein geneigtes Einführen eines Bohrers in die Geräuschdämpfungskammer die Mantelfläche der Geräuschdämpfungskammer 6 in Richtung auf eine in der ersten Ventilreihe X angeordnete Ventilaufnahmebohrung 2 durchdringt. Analog dazu wird der Bohrer in die Pumpenbohrung 3 derart eingeführt, dass der Schrägkanal 10 durch die Mantelfläche der Pumpenbohrung 3 in Richtung auf den Boden der Geräuschdämpfungskammer 6 gebohrt werden kann.

Durch die unmittelbare Anordnung der Pumpenbohrung 3 zwischen den Niederdruckspeicherbohrungen 5 und der zweiten Ventilreihe Y ergeben sich überdies besonders kurze todraumoptimierte Druckmittelkanäle 5' zwischen den normalerweise geschlossenen Auslaßventilen der zweiten Ventilreihe Y über die Niederdruckspeicher 5 zur Pumpenbohrung 3, wodurch sich der zur Erstbefüllung des Hydraulikaggregats erforderliche Evakuier- und Befüllprozeß vereinfacht.

### Bezugszeichenliste

- 1: Aufnahmekörper
- 2: Ventilaufnahmebohrung
- 2': Druckmittelkanal
- 3: Pumpenbohrung
- 3': Pumpensaugkanal
- 4: Motoraufnahmebohrung
- 5: Niederdruckspeicherbohrung
- 5': Pumpensaugkanal
- 6: Geräuschdämpfungskammer
- 7: Verschlußkörper
- 8: Durchgangsbohrung
- 9: Blende
- 10: Schrägkanal
- 11: Schrägkanal
- X: Erste Ventilreihe
- Y: Zweite Ventilreihe
- THZ: Bremsdruckgeberanschluß
- HL, HR, VR, VL: Radbremsanschluß

## Patentansprüche

1. Hydraulikaggregat für eine schlupfgeregelte Bremsanlage,
- mit einem Aufnahmekörper (1), der in mehreren Ventilaufnahmebohrungen (2) einer ersten und zweiten Ventilreihe (X, Y) Ein- und Auslaßventile aufnimmt,
- mit einer außerhalb zu den beiden Ventilreihen (X, Y) im Aufnahmekörper (1) angeordneten Pumpenbohrung (3), die quer zur Einmündungsrichtung der Ventilaufnahmebohrungen (2) in den Aufnahmekörper (1) gerichtet ist,
- mit zwei außerhalb zu den beiden Ventilreihen (X, Y) in den Aufnahmekörper (1) einmündenden Niederdruckspeicherbohrungen (5), die senkrecht zu den Achsen der Ventilaufnahmebohrungen (2) und der Pumpenbohrung (3) in den Aufnahmekörper (1) einmünden,
- mit wenigstens einer an der Pumpenbohrung (3) angeschlossenen, hohlzylinderförmigen Geräuschdämpfungskammer (6), die parallel zur Pumpenbohrung (3) in einer Gehäuseebene angeordnet ist, die parallel zu einer die Ventilaufnahmebohrungen (2) aufweisenden Gehäuseebene angeordnet ist,
- mit mehreren die Ventilaufnahmebohrungen (2), Pumpen- und Niederdruckspeicherbohrungen (3, 5) verbindenden Druckmittelkanäle, die zum Transport von Druckmittel eine hydraulische Verbindung zwischen den in den Aufnahmekörper (1) einmündenden Bremsdruckgeberanschlüssen (THZ) und den Radbremsanschlüssen (HL, HR, VR, VL) herzustellen vermögen,
wobei wenigstens ein Mittel (10, 11) vorhanden ist, welches für die Durchströmung und Umlenkung des Druckmittels in der Geräuschdämpfungskammer (6) eine definierte Zu- als auch Abströmrichtung des Druckmittels bewirkt, **dadurch gekennzeichnet, daß** das Mittel durch einen Schrägkanal (10) gebildet ist, der unter einem spitzen Winkel von einer Seitenfläche des Aufnahmekörpers (1) aus die Wand der Pumpenbohrung (3) durchdringt und im Bereich des Bodens der Geräuschdämpfungskammer (6) einmündet, und daß das Mittel durch einen weiteren Schrägkanal (11) gebildet ist, der unter einem spitzen Winkel von der Seitenfläche des Aufnahmekörpers (1) aus die Wand der Geräuschdämpfungskammer (6) in Richtung auf eine Ventilaufnahmebohrung (2) in der ersten Ventilreihe (X) durchdringt und im Boden der Ventilaufnahmebohrung (2) einmündet, so daß durch die vom Schrägkanal (10) vorgegebene Zuströmrichtung das von der Pumpe in den Schrägkanal (10) geförderte Druckmittel auf den Boden der Geräuschdämpfungskammer (6) trifft, dort aufgerichtet und umgelenkt wird, wobei der Strömungsverlauf anschließend entgegengesetzt zur Zuströmung innerhalb der Geräuschdämpfungskammer (6) in Richtung eines in die Geräuschdämpfungskammer (6) eingesetzten Verschlusskörpers (7) erfolgt, dort wiederum eine Kehrtwendung der Strömung in die entgegengesetzte Richtung erfolgt, die der Abströmrichtung des weiteren Schrägkanals (11) entspricht.

2. Hydraulikaggregat nach Anspruch 1, **dadurch gekennzeichnet, daß** die beiden Schrägkanäle (10, 11) in Durchströmungsrichtung stets aufsteigend zu den am höchsten Punkt des Aufnahmekörpers (1) angeordneten Bremsdruckgeberanschlüssen (THZ) gerichtet sind.

3. Hydraulikaggregat nach Anspruch 1 oder 2, **dadurch gekennzeichnet, daß** beide Schrägkanäle (10, 11) an der Seitenfläche des Aufnahmekörpers durch zwei Verschlusskörper (7) verschlossen sind, die ebenso die Pumpenbohrung (3) und die Geräuschdämpfungskammer (6) verschließen.

4. Hydraulikaggregat nach Anspruch 1, **dadurch gekennzeichnet, daß** der weitere Schrägkanal (11) mit einer Blende (9) versehen ist, die stromabwärts zur Geräuschdämpfungskammer (6) in dem Abschnitt des Schrägkanals (11) eingesetzt ist, der am Boden der Ventilaufnahmebohrung (2) angeschlossen ist.

5. Hydraulikaggregat nach Anspruch 1, **dadurch gekennzeichnet, daß** der Schrägkanal (10) stromabwärts zu einem in die Pumpenbohrung (3) eingesetzten Pumpendruckventil die Pumpenbohrung (3) durchdringt.

## Claims

1. Hydraulic unit for a slip-controlled brake system,
- with an accommodating member (1) accommodating inlet and outlet valves in several valve accommodating bores (2) of a first and a second valve row (X, Y),
- with a pump bore (3) which is arranged outside the two valve rows (X, Y) in the accommodating member (1) and is aligned transversely to the direction of the valve accommodating bores (2) opening into the accommodating member (1),
- with two low-pressure accumulator bores (5) opening into the accommodating member (1) outside the two valve rows (X, Y) and opening into the accommodating member (1) vertically to the axes of the valve accommodating bores (2) and the pump bore (3),
- with at least one hollow-cylinder-shaped noise damping chamber (6) connected to the pump bore (3) and being arranged in parallel to the pump bore (3) in a housing plane, which is arranged in parallel to a housing plane that includes the valve accommodating bores (2),
- with several pressure fluid channels connecting the valve accommodating bores (2), pump bores and low-pressure accumulator bores (3, 5) and being adapted to establish a hydraulic connection between the brake pressure generator connections (THZ) that open into the accommodating member (1) and the wheel brake connections (RL, RR, FR, FL) for the transport of pressure fluid, with at least one means (10, 11) being provided, which brings about a defined direction of inflow and outflow of the pressure fluid for the throughflow and deviation of the pressure fluid in the noise damping chamber (6),
**characterized in that** the means is an inclined channel (10) which extends at an acute angle from a lateral surface of the accommodating member (1) through the wall of the pump bore (3) and opens into the area of the bottom of the noise damping chamber (6), and **in that** the means is an additional inclined channel (11), which extends at an acute angle from the lateral surface of the accommodating member (1) through the wall of the noise damping chamber (6) in the direction of a valve accommodating bore (2) in the first valve row (X) and opens into the bottom of the valve accommodating bore (2) so that due to the direction of inflow predetermined by the inclined channel (10), the pressure fluid supplied by the pump into the inclined channel 10 hits the bottom of the noise damping chamber (6), where it is erected and deviated, with the course of flow subsequently extending in opposition to the direction of inflow within the noise damping chamber (6) in the direction of a closure member (7) inserted into the noise damping chamber (6), and there the flow undergoes an about-turn in the opposite direction, which corresponds to the direction of outflow of the additional inclined channel (11).

2. Hydraulic unit as claimed in claim 1,
**characterized in that**, in the direction of throughflow, the two inclined channels (10, 11) are always directed to be ascending to the brake pressure generator connections (THZ) arranged at the highest point of the accommodating member (1).

3. Hydraulic unit as claimed in claim 1 or 2,
**characterized in that** both inclined channels (10, 11) are closed at the lateral surface of the accommodating member by means of two closure members (7), which also close the pump bore (3) and the noise damping chamber (6).

4. Hydraulic unit as claimed in claim 1,
**characterized in that** the additional inclined channel (11) is furnished with an orifice (9) which, downstream of the noise damping chamber (6), is inserted into the portion of the inclined channel (11) that is connected at the bottom of the valve accommodating bore (2).

5. Hydraulic unit as claimed in claim 1,
**characterized in that** the inclined channel (10) penetrates the pump bore (3) downstream of a pump pressure valve inserted into the pump bore (3).

## Revendications

1. Groupe hydraulique pour un système de freinage avec régulation du patinage,
- comportant un corps de réception (1) qui reçoit des soupapes d'admission et d'échappement dans plusieurs alésages de réception de soupape (2) d'une première et d'une seconde rangée de soupapes (X, Y),
- comportant un alésage de pompe (3), disposé à l'extérieur des deux rangées de soupapes (X, Y) dans le corps de réception (1), lequel alésage est orienté transversalement à la direction d'embouchure des alésages de réception de soupape (2) dans le corps de réception (1),
- comportant deux alésages d'accumulateur basse pression (5) débouchant à l'extérieur des deux rangées de soupapes (X, Y) dans le corps de réception (1), lesquels débouchent perpendiculairement aux axes des alésages de réception de soupape (2) et de l'alésage de pompe (3) dans le corps de réception (1),
- comportant au moins une chambre d'amortissement de bruit (6) de forme cylindrique creuse, raccordée à l'alésage de pompe (3), laquelle est disposée parallèlement à l'alésage de pompe (3) dans un plan de carter qui est disposé parallèlement à un plan de carter présentant les alésages de réception de soupape (2),
- comportant plusieurs canaux de fluide sous pression, reliant les alésages de réception de soupape (2), les alésages de pompe et alésages d'accumulateur basse pression (3, 5), qui permettent de réaliser, pour le transport d'un fluide sous pression, une liaison hydraulique entre les raccords de transmetteur de pression de freinage (THZ) débouchant dans le corps de réception (1) et les raccords de frein de roue (HL, HR, VR, VL), au moins un moyen (10, 11) étant prévu qui assure, pour la circulation et la déviation du fluide sous pression dans la chambre d'amortissement de bruit (6), un sens défini d'arrivée et de départ du fluide sous pression,
**caractérisé en ce que** le moyen est formé par un canal oblique (10) qui traverse la paroi de l'alésage de pompe (3), suivant un angle aigu depuis une surface latérale du corps de réception (1), et débouche dans la zone du fond de la chambre d'amortissement de bruit (6), et **en ce que** le moyen est formé par un autre canal oblique (11) qui traverse, suivant un angle aigu depuis la surface latérale du corps de réception (1), la paroi de la chambre d'amortissement de bruit (6) en direction d'un alésage de réception de soupape (2) dans la première rangée de soupapes (X), et débouche dans le fond de l'alésage de réception de soupape (2), ce qui fait que, du fait du sens d'arrivée prédéfini par le canal oblique (10), le fluide sous pression transporté par la pompe dans le canal oblique (10), parvient sur le fond de la chambre d'amortissement de bruit (6), y est orienté et dévié, l'écoulement s'effectuant ensuite en sens opposé au courant d'arrivée à l'intérieur de la chambre d'amortissement de bruit (6), en direction d'un corps de fermeture (7) inséré dans la chambre d'amortissement de bruit (6), à cet endroit il se produit à nouveau une inversion du courant dans le sens opposé qui correspond au sens de départ de l'autre canal oblique (11).

2. Groupe hydraulique selon la revendication 1, **caractérisé en ce que** les deux canaux obliques (10, 11) sont toujours orientés ascendants, dans le sens de passage, vers les raccords de transmetteur de pression de freinage (THZ) disposés au point le plus haut du corps de réception (1).

3. Groupe hydraulique selon la revendication 1 ou 2, **caractérisé en ce que** les deux canaux obliques (10, 11) sont fermés sur la surface latérale du corps de réception par deux corps de fermeture (7) qui ferment également l'alésage de pompe (3) et la chambre d'amortissement de bruit (6).

4. Groupe hydraulique selon la revendication 1, **caractérisé en ce que** l'autre canal oblique (11) est pourvu d'un diaphragme (9) qui est inséré en aval de la chambre d'amortissement de bruit (6), dans le segment du canal oblique (11) qui est raccordé au fond de l'alésage de réception de soupape (2).

5. Groupe hydraulique selon la revendication 1, **caractérisé en ce que** le canal oblique (10) traverse l'alésage de pompe (3) en aval d'une soupape de pression de pompe insérée dans l'alésage de pompe (3).
